# EUROPÄISCHE PATENTANMELDUNG

(11) **EP 1 231 804 A1**
(43) Veröffentlichungstag der Anmeldung: **14.08.2002**
(21) Anmeldenummer: 01102690.3
(22) Anmeldetag: 07.02.2001
(51) Int. Cl.: H04Q 7/38, H04J 13/02

(54) **Verfahren und Kommunikationsvorrichtung zum Zuweisen eines Codes in einem CDMA-Kommunikationssystem**

(71) Anmelder: SIEMENS AKTIENGESELLSCHAFT, 80333 München (DE)
(72) Erfinder: Druzinic, Rok, Dr., 13407 Berlin (DE); Hillebrand, Frank, 13587 Berlin (DE); Jarbot, Lutz, 13465 Berlin (DE); Lehmann, Gerald, 12101 Berlin (DE); Meiling, Axel, 13597 Berlin (DE); Schmitz, Heiko, Dr., 13347 Berlin (DE)

(57) **Zusammenfassung**

Ein Verfahren zum Zuweisen einer Ressourceneinheit (einem Code) einer geteilten Ressource in einem Kommunikationssystem mit Code/Ressourcenteilung für Übertragungen von Daten einer Vielzahl von auf einem Träger (V) kommunizierenden Stationen (MS,BS) wird veröffentlicht, wobei zur Übertragung von Daten zwischen zumindest jeweils zwei Stationen (MS,BS) eine Kommunikationsverbindungen über eine Schnittstelle (V) betrieben wird, aus einer Vielzahl verfügbarer Ressourceneinheiten eine Ressourceneinheit mit möglichst geringer Störung/Interferenz zu Ressourceneinheiten anderer Verbindungen auf dem Träger ausgewählt wird und die übertragenen/zu übertragenden Daten für die Übertragung entsprechend der ausgewählten Ressourceneinheit für die Übertragung aufbereitet (codiert bzw. decodiert) werden.

Um eine dezentrale Ressourcen/Codezuweisung zu ermöglichen, wird vorgeschlagen, die Auswahl der für eine bestimmte Verbindung zu verwenden Ressourceneinheit direkt durch eine oder beide der beiden kommunizierenden Stationen (MS,BS) durchzuführen.

## Beschreibung

Die Erfindung bezieht sich auf ein Verfahren zum Zuweisen eines Codes in einem CDMA-Kommunikationssystem mit den oberbegrifflichen Merkmalen des Patentanspruchs 1 bzw. eine Kommunikationsvorrichtung mit Einrichtungen zum Durchführen eines solchen Verfahrens.

Bei digitalen Funk-Kommunikationssystemen, beispielsweise dem Mobilfunksystem GSM (Global System for Mobile Communications), werden Informationen wie beispielsweise Sprache, Bildinformation oder andere Daten mit Hilfe von elektromagnetischen Wellen über eine Funkschnittstelle übertragen. Die Funkschnittstelle dient als eine Verbindung zwischen einer Basisstation und einer Vielzahl von Teilnehmerstationen, wobei die Teilnehmerstationen beispielsweise Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen.

Um den Bedarf des zur Verfügung stehenden Spektrums an der knappen Ressource "Trägerfrequenz" besser zu decken, wurden synchrone Multiplexverfahren auf der Basis eines frequenz-, zeit- und/oder spreizcodeselektiven Vielfachzugriffs zur Verteilung der Übertragungskapazität eines Kanals auf mehrere Verbindungen eingeführt. Hierzu wird in Absprache zwischen Sender und Empfänger unter Einbeziehung eventueller Vermittlungsknoten ein vorgegebenes Raster aus sende- und empfangssynchronen Frequenzbändern, Zeitschlitzen und/oder Codesequenzen genutzt. Die Sender ordnen die Daten der einzelnen Verbindungen diesem Raster zu und die Empfänger separieren aus dem empfangenen Datenstrom die für sie bestimmten Daten.

Für die dritte Mobilfunkgeneration UMTS (Universal Mobile Telecommunications System) sind z.B. zwei Modi vorgesehen, wobei ein Modus einen FDD-Betrieb (Frequency Division Duplex) und der andere Modus einen TDD-Betrieb (Time Division Duplex) zugrunde legt. Diese Modi finden ihre Anwendung in unterschiedlichen Frequenzbändern, wobei beide Modi ein codeteilendes CDMA-Teilnehmer-Separierungsverfahren (CDMA: Code Division Multiple Access) unterstützen.

Bei solchen Kommunikationssystemen, insbesondere einem Mobilfunksystem mit CDMA-Komponente, ist ein unkoordinierter Betrieb der einzelnen Teilnehmer nicht möglich. Voraussetzung ist eine zuvor geplante zellulare Netzstruktur, in der sich ortsfeste Basisstationen befinden. Mittels einer solchen Anordnung eine Codevergabe und deren Optimierung nur zentral möglich.

In einem CDMA-Kommunikationssystem wird der Vielfachzugriff auf die Luftschnittstelle mit Hilfe des CDMA-Verfahrens ermöglicht. Hierbei werden die einzelnen Teilnehmerstationen oder einzelne Verbindungen durch die Verwendung von verschiedene Spreiz- und Scramblingcodes unterschieden. Eine solche Bandspreiztechnik kann mit anderen Viefachzugriffsverfahren wie TDMA und FDMA (Time/Frequency Division Multiple Access) kombiniert werden.

Die Güte der Trennung der einzelnen Verbindungen untereinander hängt bei Verwendung der CDMA-Technologie stark von den grundsätzlichen Eigenschaften der einzelnen verwendeten Codes bzw. deren Kreuzkorrelationseigenschaften ab, hängt aber auch von den Eigenschaften des Übertragungskanals, von der zeitlichen Synchronität der Teilnehmerstationen und von den Leistungsverhältnissen der einzelnen Signale ab.

Aufgrund der zuvor genannten Bedingungen für eine ausreichende Trennung der einzelnen CDMA-Signale auf der Empfängerseite ist es derzeit unerläßlich, den Zugriff auf die Luftschnittstelle zu organisieren und zu steuern. Insbesondere müssen die Verwendung von gleichen Codes oder von Codes mit starker Kreuzkorrelation vermieden und die zeitliche Synchronität hergestellt und geregelt werden. Zusätzlich sollte die Signalleistung der einzelnen sendenden Teilnehmer gesteuert werden, so dass die Signale mit ungefähr gleicher Leistung beim Empfänger ankommen. Nur unter diesen Bedingungen bleiben die Eigenschaften der einzelnen Codes zueinander erhalten und eine ausreichende empfängerseitige Trennung der Signale wird ermöglicht.

Zur Erfüllung dieser Forderungen wird eine zentrale Steuerung der Codezuweisung, der zeitlichen Synchronität und der einzelnen Sendeleistungen eingesetzt. Dies kann mit der bekannten zellularen Struktur von Mobilfunksystemen aufwandsgünstig erreicht werden, wobei Codezuweisung, Leistungsregelung und zeitliche Steuerung der Mobilfunkteilnehmer zentral durch eine Basisstation innerhalb der Zelle ausgeführt werden. Man spricht hier von koordinierten aber auch durch Netzplanung optimierten Systemen, die bei allen öffentlichen und lizensierten Mobilfunksystemen Anwendung finden. Es handelt sich aber nicht um dezentrale Verfahren zur Codevergabe, sondern um Verfahren, die nur den Betrieb eines koordinierten CDMA-Mobilfunksystems ermöglichen.

Bei bisher bekannten Mobilfunksystemen unter Verwendung der CDMA-Technologie wird immer von einem zuvor geplanten zellularen Netzwerk mit ortsfesten Basisstationen ausgegangen. Unter diesen Voraussetzungen kann eine zentrale Steuerung der Codevergabe, d.h. der Ressourcenzuweisung, des Zeitverhaltens der mobilen Teilnehmer und der Leistungsregelung erfolgen und somit die Verwendung der CDMA-Technologie ermöglicht werden. So werden Basisstationen zuvor feste Scramblingcodes zugewiesen und eine zentrale Einheit steuert die Zuweisung der Spreizcodes für die einzelnen Verbindungen innerhalb einer Zelle. Diese Systeme zeichnen sich sind generell dadurch aus, dass eine Gruppe von Einheiten, die sich gegenseitig interferieren könnten und das gleiche Frequenzband nutzen wollen, bei einer zentralen Stelle bekannt sein müssen, um ihnen Ressourcen zentral zuzuweisen.

Die Aufgabe der Erfindung besteht darin, ein Verfahren bzw. Kommunikationsvorrichtungen zum Zuweisen eines Codes in einem CDMA-Kommunikationssystem vorzuschlagen, bei denen eine Codezuweisung nicht zwingend zentral erfolgen muss.

Diese Aufgabe wird durch das Verfahren mit den Merkmalen des Patentanspruchs 1 bzw. die Kommunikationsvorrichtung mit den Merkmalen des Patentanspruchs 8 gelöst.

Vorteilhafte Ausgestaltungen sind Gegenstand von abhängigen Ansprüchen.

Vorteilhafterweise kann die Codevergabe bei einem solchen Verfahren dezentral und temporär erfolgen, wobei die zumeist mobilen Teilnehmerstationen zunächst nicht untereinander bekannt oder koordiniert sein müssen.

Die Detektierung von bereits auf der Luftschnittstelle verwendeten Codes an der Einheit, die einen neuen oder zusätzlichen Code verwenden möchte, bietet die Möglichkeit diese Informationen für die Codeauswahl zu verwenden.

Eine Signalisierung der Codes, die ein Kommunikationsteilnehmer detektiert hat und selber verwendet, ermöglicht anderen Teilnehmern für deren spätere Codeauswahl diese Informationen zu verwenden.

Vorteilhaft ist auch die zeitliche Adaption der Tabellen oder der Berechnungsvorschriften, um die Kommunikationsvorrichtung in verschiedenen Regionen oder Kommunikationssystemen einsetzen zu können. Eine Anpassung ermöglicht auch bei nur geringem Speicherraum stets eine Mindestzahl möglicher Codes aus eine viel größeren Vielzahl möglicher Codes sofort bereitstellen zu können, wobei als momentan belegt erkannte Codes vorteilhafterweise gegen andere mögliche Codes ausgetauscht werden.

Insbesondere bei Verwendung von Codegruppen mit kürzeren Längen vermeidet eine dezentrale und im Vergleich zu bekannten Systemen bedingt zufällige Auswahl der Codes zu starke Interferenzen und führt zu einer effizienteren Nutzung des Leistungs-Spektrums.

Gegenstand ist vorteilhafterweise ein Kommunikationssystem, insbesondere ein Mobilfunksystem mit CDMA-Komponente, das einen unkoordinierten Betrieb der einzelnen Teilnehmer ermöglicht, was eine Umgehung bislang prinzipieller Grundbedingungen darstellt. So muss bei einem solchen System nicht mehr von einer zuvor geplanten zellularen Netzstruktur ausgegangen werden, in der sich zentrale ortsfeste Basisstationen befinden. Vielmehr kann die Codevergabe und deren Optimierung dezentral erfolgen.

Ein Ausführungsbeispiel wird nachfolgend anhand der Zeichnung näher erläutert. Es zeigt:

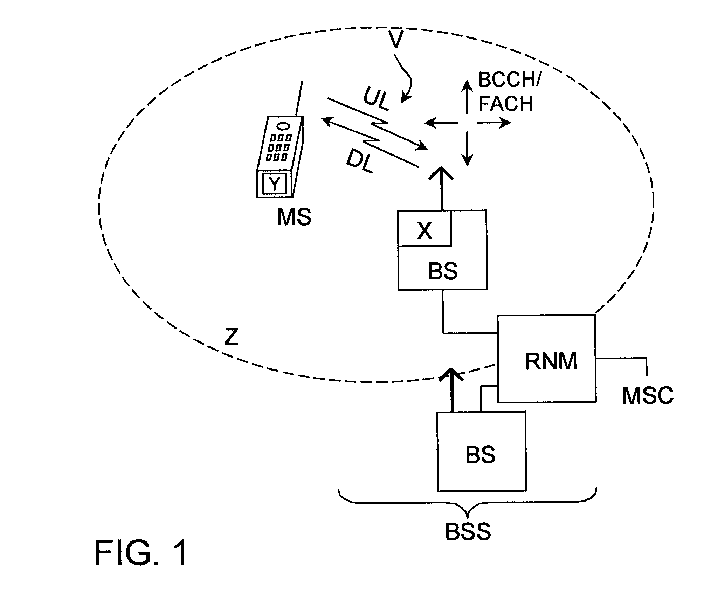

- Fig. 1: eine einfache Form eines Funk-Kommunikationsnetzes mit einer Kommunikationsverbindung zwischen einer Netzstation und einer Teilnehmerstation.

Wie aus Fig. 1 ersichtlich, ist das nachfolgend beschriebene Verfahren insbesondere in einem Kommunikationssystem, z.B. einem Mobilfunksystem anwendbar. Das beispielhaft dargestellte Mobilfunksystem als ein für sich bekanntes FunkKommunikationssystem weist eine Vielzahl von Netzelementen auf, insbesondere netzseitig Mobilvermittlungsstellen MSC, Einrichtungen RNM zum Zuteilen von funktechnischen Ressourcen, als Sende-/Empfangseinrichtungen Basisstationen BS und teilnehmerseitig in der untersten Hierarchieebene als Sende/Empfangseinrichtungen Teilnehmerstationen MS.

Die Mobilvermittlungsstellen MSC, die untereinander vernetzt sind und von denen hier nur eine dargestellt ist, stellen den Zugang zu einem Festnetz oder einem anderen Funknetz her. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle V eine Verbindung zu Teilnehmerstationen, z.B. mobilen Stationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt.

In Fig. 1 ist beispielhaft eine bestehende Verbindung V zur Übertragung von Nutzinformationen und Signalisierungsinformationen zwischen einer mobilen Station MS und einer Basisstation BS dargestellt. Übertragungen in Aufwärtsrichtung UL (Uplink) erfolgen von der Basisstation BS zur mobilen Station MS, Übertragungen in Abwärtsrichtung DL (Down Link) in umgekehrter Richtung. Weiterhin ist ein Organisationskanal (FACH oder BCCH: Broadcast Control CHannel) dargestellt, der zur Übertragung von Nutz- und Signalisierungsinformationen mit einer definierten Sendeleistung von jeder der Basisstationen BS für alle mobilen Stationen MS im Bereich der Funkzelle Z bereitgestellt wird.

Gemäß einem bevorzugten Ausführungsbeispiel weisen die Teilnehmerstation MS und/oder eine Netzstation, wie die Basisstation BS, einen Speicher Y bzw. X auf, in dem Parameter oder Rechenvorschriften für eine dezentrale Vergabe von Spreizund Scramblingcodes innerhalb des z.B. CDMA-Kommunikationssystems abgespeichert werden. Die Speicher Y bzw. X dienen somit als eine Art von Tabellen oder für Rechenvorschriften, welche die Korrelationseigenschaften und weitere Parameter berücksichtigen, um die Interferenz zwischen den Teilnehmerstationen MS zu minimieren.

Dabei setzt dieses Verfahren vorteilhafterweise keine zellulare Netzstruktur voraus. Die erzeugte Interferenz zwischen den Teilnehmern hängt in einem AWGN-Kanal (AWGN: Additive White Gaussian Noise) von den grundsätzlichen Korrelationseigenschaften der Codes zueinander ab.

Bei einer limitierten Länge der Spreiz- und Scramblingcodes können nicht alle Codes orthogonal zueinander sein, da meist mehr Codes verwendet werden, um die Kanalkapazität gut auszunutzen. Hinzu kommt der Umstand, dass die orthogonalen Eigenschaften oder gute Kreuzkorrelationswerte durch Mehrwegeausbreitung, Asynchronität und Fading reduziert oder sogar zerstört werden. Dennoch ist die Codeplanung vorteilhaft, wenn man davon ausgehen kann, dass Synchronität hergestellt werden und/oder wenn in vielen Fällen ein direkter starker Pfad (Line Of Sight) angenommen werden kann.

Will eine Teilnehmerstation MS eine Verbindung aufbauen, so wählt sie für sich einen Code aus, der möglichst wenig Interferenz zu den bereits auf der Luftschnittstelle verwendeten Codes erzeugt. Dazu wird die Kenntnis von bereits vorhandenen Codes benötigt, die bislang nur bei der Basisstation bekannt waren. Die Teilnehmerstation MS kann sich solche Codes z.B. durch Messungen der Luftschnittstelle V oder durch Übermittlungen seitens der Basisstation BS beschaffen.

Nach einer ebenfalls im Speicher Y hinterlegbaren Prioritätstabelle, in der die bereits verwendeten Codes berücksichtigt sind, sucht die Teilnehmerstation MS für sich einen neuen Code heraus. In diesen Tabellen können auch weitere Parameter berücksichtigt werden, wie eine maximal mögliche Kreuzkorrelation, eine mittlere mögliche Kreuzkorrelation und eine erreichte Synchronität.

So ist es vorteilhaft, in Abhängigkeit von der erreichten Synchronität der Teilnehmerstationen MS untereinander bestimmte Codes zu vergeben. Z.B. können bei erreichter Synchronität diesen Teilnehmerstationen MS Codes zugewiesen werden, die prinzipiell orthogonal zueinander sind. Dies ist insbesondere der Fall, wenn von einer zellularen Struktur mit ortsfesten Stationen ausgegangen werden kann.

In diesen Tabellen kann auch eingearbeitet werden, dass bestimmte Codes a priori als reserviert und/oder als bereits existent angenommen werden. Die bereits auf der Luftschnittstelle verwendeten Codes können entweder durch Detektion am Empfänger oder durch Übertragung dieser Informationen durch andere Teilnehmer erfolgen.

Die zu verwendenden Prioritätstabellen können mit Hilfe einer Bestimmung der Korrelationseigenschaften aller möglichen Codes untereinander erstellt werden, wobei die bereits genannten Parameter, wie eine erreichte Synchronität, eine maximale und eine minimale Kreuzkorrelation mit berücksichtigt werden können.

Diese Tabellen können im Sender und im Empfangsgerät, hier der Basisstation BS bzw. der Teilnehmerstation MS gespeichert werden. Auch ist es möglich, diese Tabellen nach bestimmten Rechenvorschriften unter Berücksichtigung von durch die Teilnehmerstation MS und/oder die Basisstation BS selbst bestimmten oder untereinander mitgeteilten Parametern in der Teilnehmerstation MS oder einer Netzeinrichtung, wie der Basisstation BS bei Bedarf neu zu berechnen. Dadurch können an die jeweiligen Gegebenheiten adaptierte Tabellen erhalten werden.

Die derart mögliche lokale und dezentrale Codebestimmung mittels Prioritätstabellen ersetzt oder ergänzt somit die für sich bekannte zentrale Codevergabe und -planung. Dadurch wird insbesondere die Verwendbarkeit von CDMA in unkoordinierten Kommunikationssystemen möglich. Dieses Verfahren ist aber auch in koordinierten Systemen anwendbar.

Dieses Verfahren kann insbesondere ein wesentliches Element in z.B. einem unlizensierten CDMA-Mobilfunksystem sein, wo Basisstationen unkoordiniert aufgestellt werden können und diese sich gleiche Ressourcen teilen müssen. In diesem Fall ist es einrichtbar, dass vor einem Zugriff auf die Luftschnittstelle zuerst ermittelt wird, welche Codes bereits verwendet werden, um dann nach dem vorstehend beschriebenen Verfahren eine Auswahl des eigenen Scrambling- und/oder Spreizcodes vorzunehmen.

Dieses Verfahren ist auch in einem unkoordinierten und unlizensierten CDMA Mobilfunksystem anwendbar, welches keine oder nur eine geringe Anzahl von ortsfesten Stationen besitzt. Hier kann die dezentrale Codeauswahl für jeden mobilen Teilnehmer flexibel und jeweils angepaßt an die sich ändernden Gegebenheiten in jedem Transceiver (Sende-/Empfängerstation) vorgenommen werden.

Vorteilhafterweise erfolgt die Vergabe von Spreiz- und Scramblingcodes in einem CDMA-Mobilfunksystem dezentral mit Hilfe von Prioritätstabellen.

In solchen Tabellen kann eine Vielzahl von Parametern, Messgrößen und dergleichen berücksichtigt werden, wie beispielsweise Art und Leistungsverhältnisse der bereits auf der Luftschnittstelle detektierten Codes, erreichte oder erreichbare Synchronität der Teilnehmer der zu berücksichtigen Codes, eine minimale Maximalkreuzkorrelation als Optimierungskriterium und/oder eine minimale Durchschnittskreuzkorrelation als Optimierungskriterium. Berücksichtigt werden können z.B. auch eine Reservierung bestimmter Codes, z.B. für Kanäle mit besonderen Aufgaben, wie der Direktzugriffskanal (RACH) oder ein Notfallkanal (Emergency channel). Ferner können detektierte Kanalimpulsantworten, Autokorrelationseigenschaften der Codes oder räumliche Informationen berücksichtigt werden.

Bei einer Vielzahl verfügbarer Codes kann eine Prioritätstabelle für die Auswahl herangezogen werden. Sollte das beschriebene Codeauswahlverfahren mehrere Codes mit gleichen Eigenschaften zur Auswahl stellen, so kann der Code aus den zuvor ermittelten verfügbaren auch durch ein Zufallsverfahren ausgewählt werden

Die Anwendung ist insbesondere auch in einem CDMA Transceiver eines unlizensierten CDMA-Mobilfunksystem möglich.

## Patentansprüche

1. Verfahren zum Zuweisen einer Ressourceneinheit einer geteilten Ressource in einem Kommunikationssystem mit Ressourcenteilung für Übertragungen von Daten einer Vielzahl von auf einem Träger (V) kommunizierenden Stationen (MS, BS), wobei
- zur Übertragung von Daten zwischen zumindest jeweils zwei Stationen (MS, BS) eine Kommunikationsverbindungen über eine Schnittstelle (V) betrieben wird,
- aus einer Vielzahl verfügbarer Ressourceneinheiten eine Ressourceneinheit, die für andere Verbindungen auf dem Träger möglichst geringe Störung/Interferenz verursacht, ausgewählt wird und
- die übertragenen/zu übertragenden Daten für die Übertragung entsprechend der ausgewählten Ressourceneinheit für die Übertragung aufbereitet werden,
**dadurch gekennzeichnet, dass**
- die Auswahl der für eine bestimmte Verbindung zu verwendenden Ressourceneinheit dezentral durch zumindest eine der über die Schnittstelle kommunizierenden Stationen (MS, BS) durchgeführt wird.

2. Verfahren nach Anspruch 1, bei dem
als Ressource ein zeit- oder codegeteilter Träger für elektromagnetische Datenübertragungen verwendet wird, insbesondere als die Ressourceneinheiten Spreiz- und/oder Scramblingcodes innerhalb eines Kommunikationssystems mit codegeteiltem Träger verwendet werden.

3. Verfahren nach Anspruch 2, bei dem
die Vielzahl verfügbarer Ressourceneinheiten in zumindest einer der Stationen (MS, BS) abgespeichert wird.

4. Verfahren nach einem vorstehenden Anspruch, bei dem
die Vielzahl verfügbarer Ressourceneinheiten in zumindest einer der Stationen (MS, BS) aktualisiert oder neu bestimmt wird.

5. Verfahren nach einem vorstehenden Anspruch, bei dem
vor der Auswahl einer Ressourceneinheit durch einen Zugriff auf den Träger zuerst ermittelt wird, welche Ressourceneinheiten bereits verwendet werden und dieses Ergebnis bei der Auswahl berücksichtigt wird.

6. Verfahren nach einem vorstehenden Anspruch, bei dem
vor der Auswahl einer Ressourceneinheit eine Priorisierung verschiedener verfügbarer Ressourceneinheiten durchgeführt wird.

7. Verfahren nach einem vorstehenden Anspruch, bei dem
eine Information über die von einer der Stationen (MS, BS) verwendeten Kommunikationseinheiten an andere Stationen signalisiert wird, die diese Signalisierung wiederum bei einer späteren Auswahl eines Codes berücksichtigen.

8. Kommunikationsvorrichtung für ein Kommunikationssystem mit einer geteilten Ressource für Übertragungen von Daten einer Vielzahl von auf einem Träger (V) kommunizierenden Stationen (MS, BS), wobei die Kommunikationsvorrichtung aufweist: zumindest eine Sende-/Empfangseinrichtung,
zumindest einen Speicher (Y bzw. X) zum Abspeichern von Betriebsparametern und
zumindest eine Steuereinrichtung, die
- zum Betreiben einer Kommunikationsschnittstelle auf dem Träger mit zumindest einer anderen Station (BS, MS),
- zum Auswählen einer Ressourceneinheit der geteilten Ressource aus einer Vielzahl von Ressourceneinheiten für auf der Kommunikationsschnittstelle übertragene/zu übertragende Daten, und
- zum Verarbeiten der übertragenen/zu übertragenen Daten entsprechend der ausgewählten Ressourceneinheit ausgebildet sind,
**dadurch gekennzeichnet, dass**
- im Speicher (Y bzw. X) eine Vielzahl von Ressourceneinheiten zur Auswahl einer jeweils aktuell verfügbaren Ressourceneinheit abgespeichert ist und
- die Steuereinrichtung zum dezentralen Auswählen der Ressourceneinheit ausgebildet ist.

9. Kommunikationsvorrichtung nach Anspruch 8, bei der
im Speicher ein Speicherraum mit einer Prioritätstabelle angelegt ist.

10. Verwendung eines Verfahrens und/oder einer Kommunikationsvorrichtung nach einem vorstehenden Anspruch
in einem unkoordinierten Mobilfunksystem mit zellularer und/oder nicht-zellularer Struktur.

11. Verwendung eines Verfahrens und/oder einer Kommunikationsvorrichtung nach einem vorstehenden Anspruch
in einem Mobilfunksystem mit TDMA- und/oder FDMA- und/oder CDMA-Teilung des Trägers.
